# EUROPÄISCHE PATENTSCHRIFT

(11) **EP 0 849 224 B1**
(45) Veröffentlichungstag und Bekanntmachung des Hinweises auf die Patenterteilung: **13.06.2001**
(21) Anmeldenummer: 97122267.4
(22) Anmeldetag: 17.12.1997
(51) Int. Cl.: C01G 25/02, B01J 21/06

(54) **Verfahren zur Herstellung monoklinem Zirconiumdioxid mit hoher Oberfläche**
Process for the preparation of monoclinic zirconium dioxide with high surface area
Procédé de fabrication de dioxyde de zirconium ayant une surface élevée

(30) Priorität: 20.12.1996 DE 19653629
(43) Veröffentlichungstag der Anmeldung: 24.06.1998
(73) Patentinhaber: BASF AKTIENGESELLSCHAFT, 67056 Ludwigshafen (DE)
(72) Erfinder: Wulff-Döring, Joachim, Dr., 67227 Frankental (DE); Stichert, Wolfram,, 61449 Steinbach (DE); Schüth, Ferdi, Prof. Dr., 61440 Oberursel (DE)
(74) Vertreter: Isenbruck, Günter, Dr.

(56) Entgegenhaltungen:
- EP-A- 0 207 469
- EP-A- 0 397 553
- EP-A- 0 716 883
- FR-A- 2 661 171
- DATABASE WPI Section Ch, Week 8833 Derwent Publications Ltd., London, GB; Class E32, AN 88-233802 XP002061867 & SU 1 370 079 A (PHYS CHEM INST) , 30.Januar 1988
- CHEMICAL ABSTRACTS, vol. 88, no. 22, 29.Mai 1978 Columbus, Ohio, US; abstract no. 163006n, MURASE: Seite 723; XP002061821 & NIPPON KAGAKU KAISHI, Bd. 3, 1978, JAPAN, Seiten 367-371,

## Beschreibung

Die Erfindung betrifft ein Verfahren zur Herstellung von monoklinem Zirconiumdioxid mit hoher Oberfläche. In P.D.L. Mercera et al., Applied Catalysis 57 (1990) 127 bis 148 sind Untersuchungen zur Struktur und Textur von Zirconiumdioxid-Fällungsprodukten beschrieben. Durch das Gel-Fällungsverfahren wurde Zirconiumdioxid mit einer gut entwickelten mesoporösen Textur erhalten, wobei die poröse Textur jedoch instabil war. Dies zeigte sich im schnellen Verlust der ursprünglich hohen spezifischen Oberfläche, insbesondere beim Calcinieren. Eine Lösung von Zirconylchlorid wurde tropfenweise mit Ammoniak versetzt, bis ein pH-Wert von 10,0 erreicht war. Das Fällungsprodukt wurde in der Mutterlauge für 65 Stunden gealtert, sodann filtriert, gewaschen und für 20 Stunden in Luft bei 110°C getrocknet. Das Calcinieren wurde bei Temperaturen von bis zu 850°C durchgeführt. Das erhaltene Produkt war ein Gemisch aus monokliner Phase und metastabiler tetragonaler oder kubischer Phase. Bei Temperaturen unterhalb 650°C betrug der Volumenanteil an monoklinem Zirconiumdioxid weniger als 80%. Bei der Calcinierung wurde vornehmlich die tetragonale Phase und nicht die monokline Phase gebildet.

In T. Yamaguchi, Catalysis Today 20 (1994) 199 bis 218 ist die Verwendung von Zirconiumdioxid als Katalysator oder Katalysatorträger beschrieben.

Die Zirconiumdioxide werden durch Fällung erhalten. Bei Calcinierungstemperaturen von 400°C beträgt der Anteil der tetragonalen Phase über 15%, bei Calcinierungstemperaturen von 600°C etwa 10%. Dabei fällt die Oberfläche bei dieser Temperatur auf einen Wert von etwa 25 m²/g. Mit Erhöhung der Calcinierungstemperatur fällt die Oberfläche sehr stark ab. Es wird ausgeführt, daß das Altern für einen langen Zeitraum zu der bevorzugten Bildung der monoklinen Form nach dem Calcinieren führt. Die erhaltenen Oberflächen des Zirconiumdioxids sind jedoch sehr gering.

In A. Clearfield, Catalysis Today 20, (1994) 295 bis 312 sind die Strukturen von kristallinem wasserhaltigem Zirconiumdioxid und Verfahren zu seiner Herstellung beschrieben. Zirconiumdioxid wird durch Fällung von löslichen Zirconiumsalzen hergestellt. In einem pH-Wertbereich der Fällung von 8 bis 12 wird ein Gehalt von etwa 30 % tetragonalem Zirconiumdioxid festgestellt, wobei der verbleibende Anteil monoklin ist. Es werden keine Aussagen über die erhaltenen Oberflächen gemacht.

In der FR-A 2 590 887 sind Zirconiumdioxidzusammensetzungen und Verfahren zu ihrer Herstellung beschrieben. Durch Fällung einer Zirconylnitrat-lösung mit Ammoniak und Waschen, Trocknen für 36 Stunden bei 150°C und Calcinieren für 1 Stunde bei 550°C wird monoklines Zirconiumdioxid mit einer spezifischen Oberfläche von 80 m²/g erhalten.

In der EP-A-0 716 883 sind Katalysatoren oder Träger beschrieben, die im wesentlichen aus monoklinem Zirconiumdioxid bestehen. Das monokline Zirconiumdioxid wird durch Fällen einer Zirconiumsalzlösung mit Ammoniak hergestellt, wobei man eine Zirconylnitrat- oder Zirconylchloridlösung zu einer wäßrigen Ammoniaklösung bei fallenden pH-Werten von 14 bis 6 zufügt. Sodann wird das Fällungsprodukt getrocknet, calciniert und tablettiert. Die so erhaltenen Zirconiumdioxidformkörper weisen einen hohen Anteil an monokliner Kristallstruktur auf. Der Anteil an monoklinem Zirconiumdioxid kann durch Trocknung unter einem Wasserdampfpartialdruck von 0,2 bis 0,9 bar bei 120°C für einen Zeitraum von etwa 16 Stunden erhöht werden. Sie besitzen BET-Oberflächen von bis zu 91 m²/g.

SU-A-1370079 betrifft die Herstellung von Zirconiumdioxid mit hoher spezifischer Oberfläche durch Behandlung von Zirconiumnitrat mit Ammoniak in einer Lösung. Die Fällung wird dabei bei einem End-pH-Wert von 9 durchgeführt. Ein Alterungsschritt ist nicht erwähnt.

Chemical Abstracts, Vol. 88, No. 22, 29. Mai 1978, No. 163006u betrifft die Wirkungen des Alterns von amorphem Zirconiumhydroxid auf die Kristallisation von Zirconiumoxid. Es ist angegeben, daß mit Ammoniak gefällte Zirconiumsalzlösungen in Wasser, Säure oder Lauge unter Rückfluß für 10 bis 120 Stunden gekocht wurden. Es wurde monoklines Zirconiumdioxid erhalten. Es sind weder der pH-Wert nach der Fällung noch eine BET-Oberfläche angegeben.

Für bestimmte katalytische Anwendungen wird bevorzugt monoklines Zirconiumdioxid eingesetzt, das neben einem möglichst hohen Anteil an monokliner Phase eine möglichst große BET-Oberfläche aufweisen soll.

Die Herstellung von monoklinem Zirconiumdioxid mit höherer Oberfläche stößt jedoch auf große Schwierigkeiten, da bei Fällungen meist der wasserreiche α-Typ des Zirconiumhydroxids entsteht und daraus das metastabile tetragonale Zirconiumdioxid, das erst oberhalb von 650°C in die monokline Modifikation übergeht und bei der Calcinierung seine Oberfläche stark vermindert.

Aufgabe der vorliegenden Erfindung ist die Bereitstellung eines Verfahrens zur Herstellung von Zirconiumdioxid, das überwiegend monoklin ist und eine hohe BET-Oberfläche aufweist.

Erfindungsgemäß wird ein Verfahren zur Herstellung von Zirconiumdioxid, das zu mindestens 80 Gew.-% monoklin ist und eine BET-Oberfläche von mindestens 100 m²/g aufweist, durch
Versetzen von wäßrigen Zirconiumsalzlösungen mit Ammoniak, bis ein Fällungsprodukt und eine wäßrige Phase gebildet werden und der pH-Wert nach der Fällung 4 bis 6 beträgt,
Altern des Fällungsproduktes in der wäßrigen Phase bei einer Temperatur von 20 bis 250°C für mindestens 2 Stunden,
Trocknen des gealterten Fällungsproduktes und
Calcinieren des Fällungsproduktes bei einer Temperatur im Bereich von 200 bis 600°C, bereitgestellt.

Die BET-Oberfläche beträgt dabei erfindungsgemäß 100 bis 350, vorzugsweise 100 bis 200, insbesondere 100 bis 160 m²/g. Das Zirconiumdioxid ist dabei vorzugsweise zu mindestens 85 Gew.-%, besonders bevorzugt zu mindestens 90 Gew.-%, insbesondere zu mindestens 95 Gew.-% monoklin. Der Anteil des monoklinen Zirconiumdioxids läßt sich dabei aus dem Röntgendiffraktogramm des Produktes bestimmen.

In der beigefügten Zeichnung sind dargestellt:

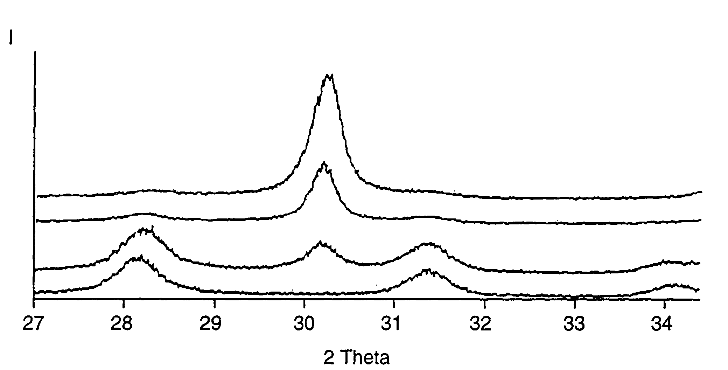

- in Fig. 1: Röntgendiffraktogramme für tetragonale Phasen, monokline Phasen und Mischphasen. I bedeutet dabei die Intensität.

Erfindungsgemäß wurde gefunden, daß weitgehend monoklines Zirconiumdioxid mit einer großen Oberfläche erhalten wird, wenn das nach der Fällung einer Zirconiumsalzlösung mit Ammoniak erhaltene Fällungsprodukt in wäßriger Phase gealtert wird. Dabei wird das zunächst entstehende tetragonale Zirconiumdioxid in monoklines Zirconiumdioxid überführt. Anschließend wird das Fällungsprodukt getrocknet und calciniert.

Dabei erfolgt das Altern bei einer Temperatur von 20 bis 250°C, besonders bevorzugt 70 bis 250°C. Das Altern wird dabei für mindestens 2 Stunden, besonders bevorzugt für mindestens 24 Stunden durchgeführt. Je nach Temperatur bei der Alterung kann die Zeit variiert werden. Bei niedrigen Alterungstemperaturen sind längere Zeiten erforderlich, um eine vollständige Umwandlung des tetragonalen Zirconiumdioxids in monoklines Zirconiumdioxid zu bewirken.

Vorzugsweise wird zunächst aus einem wasserlöslichen Zirconiumsalz wie Zirconylchlorid oder einem wasserunlöslichen Zirconiumsalz wie Zirconiumcarbonat und einer Säure eine 0,01 bis 5, vorzugsweise 0,1 bis 5, insbesondere 0,25 bis 5 mol-%ige den Zirconylrest enthaltende Lösung hergestellt. Diese Lösung wird sodann bei Temperaturen von vorzugsweise 0 bis 100°C, besonders bevorzugt 10 bis 80°C durch Zugabe einer wäßrigen Ammoniaklösung gefällt. Die wäßrige Ammoniaklösung hat vorzugsweise eine Ammoniakkonzentration von 0,01 bis 30, besonders bevorzugt 0,1 bis 30 Gew.-%. Eine entsprechende Vorgehensweise ist in der EP-A-0 716 883 beschrieben.

Der pH-Wert beträgt nach der Fällung 4 bis 6.

Zum Altern wird das Fällungsprodukt mitsamt der wäßrigen Phase in der Regel bei der in den Beispielen angegebenen Temperatur stehengelassen.

Die Zeit für das Altern beträgt dabei besonders bevorzugt 5 bis 500 Stunden. Das Calzinieren erfolgt vorzugsweise für einen Zeitraum von 0,5 bis 10, besonders bevorzugt 1 bis 6 Stunden, wenn die Temperatur im Bereich von 200 bis 450°C, vorzugsweise 250 bis 400°C liegt.

Durch diesen Alterungsschritt, der einfach durch Stehenlassen des bei der Fällung anfallenden Gemisches durchgeführt werden kann, entsteht ein hoher Anteil an monoklinem Zirconiumdioxid mit hoher Oberfläche.

Das Fällungsprodukt kann auf einer Nutsche oder einer Filterpresse ausgewaschen und von Ammoniak oder Ammoniumsalzen weitgehend befreit werden. Sodann wird es getrocknet und bei der angegebenen Temperatur calciniert. Dabei kann der Druck 0,01 bis 1 bar betragen. Für weitere Verfahrensdetails bei der Fällung, der Trocknung und dem Calcinieren kann auf die EP-A-0 716 883 verwiesen werden.

Das hergestellte Zirconiumdioxid kann auch weitere Inhaltsstoffe in geringer Menge enthalten, die bereits in der Fällungslösung enthalten sind. Entsprechende Zusätze können auch nach der Fällung vor dem Altern und Trocknen eingetragen werden. So kann zur Herstellung von sulfatiertem Zirconiumdioxid das vorstehend beschriebene Verfahren durchgeführt werden, wobei die wäßrige Phase mit Schwefelsäure, Polyschwefelsäure oder wasserlöslichen Sulfaten versetzt wird. Das Versetzen kann dabei vor oder nach der Fällung erfolgen. Vorzugsweise wird das erhaltene Fällungsprodukt nach der Fällung versetzt. Dazu werden vorzugsweise Lösungen von Schwefelsäure, Polyschwefelsäure oder wasserlöslichen Sulfaten, wie Alkalisulfaten oder besonders bevorzugt Ammoniumsulfat in Konzentrationen von 0,01 bis 50, besonders bevorzugt 0,1 bis 50 Gew.-% eingesetzt. Das Trocknen und Calcinieren erfolgt nach dem Versetzen wie vorstehend beschrieben.

Erhalten werden sulfatierte Zirconiumdioxide mit einem Sulfatanteil, berechnet als SO₄, von 0,05 bis 10, vorzugsweise 0,05 bis 8, besonders bevorzugt 0,1 bis 7 Gew.-%, bezogen auf das sulfatierte Zirconiumdioxid, das eine BET-Oberfläche von mindestens 100 m²/g aufweist, und in dem das Zirconiumdioxid zu mindestens 80 Gew.-% monoklin ist. Bevorzugte Bereiche für die Oberfläche und den Anteil an monoklinem Zirconiumdioxid sind vorstehend angegeben.

Das Calcinieren wird vorzugsweise für einen Zeitraum von 0,5 bis 10, besonders bevorzugt 1 bis 6 Stunden durchgeführt.

Besonders bevorzugt wird das Altern bei einer Temperatur von maximal 210°C und das Calcinieren bei einer Temperatur von maximal 400°C, insbesondere bei einer Alterungstemperatur von 80 bis 200°C und einer Calcinierungstemperatur von 250 bis 400°C durchgeführt.

Bei sulfatierten Zirconiumdioxiden kann die Calcinierung bei höheren Temperaturen im Vergleich zu nichtsulfatierten Zirconiumdioxiden durchgeführt werden, da die Sulfatierung zu stabilisierten Oberflächen zu führen scheint.

Aus den Zirconiumdioxiden können nach bekannten Verfahren, etwa durch Verpressen, Formkörper erhalten werden. Diese Formkörper enthalten das Zirconiumdioxid und können weiterhin übliche Inhaltsstoffe, wie Bindemittel, Tablettierungshilfsmittel, Entformungsmittel und andere Trägermaterialien enthalten. Vorzugsweise werden keine weiteren Trägermaterialien eingesetzt. Verwendbare Verfahren zur Herstellung von Formkörpern sind in der EP-A-0 716 883 beschrieben. Die Formkörper können in jeder beliebigen Form vorliegen. Beispiele sind Tabletten, Pellets, Stränge, Granulate, Ringe und andere Formen, wie sie üblicherweise bei der Verwendung als Katalysatoren auftreten. So können die Formkörper für eine Verwendung im Wirbelbett oder als Festbett ausgestattet sein.

Die erfindungsgemäß hergestellten Zirconiumdioxide können als Katalysatoren oder Katalysatorträger verwendet werden. Dabei können die Katalysatoren auch das Zirconiumdioxid als Träger umfassen, der mit 0,01 bis 30, vorzugsweise 0,1 bis 20 Gew.-% eines oder mehrerer katalytisch aktiver Metalle dotiert ist. Als katalytisch aktive Metalle kommen vorzugsweise die Elemente der Lanthaniden zum Einsatz. Dabei sind die Trägerkatalysatoren, vorzugsweise Vollkatalysatoren aus monoklinem Zirconiumdioxid, vorzugsweise mit 0,1 bis 10 Gew.-% Lanthan, Cer, Praseodym, Neodym, Samarium, Europium oder deren Gemischen, gegebenenfalls in Oxidform, dotiert. Besonders bevorzugt liegen 1 bis 8 Gew.-% Lanthan(III)oxid vor. Die Dotierung erfolgt dabei in der Regel durch Tränken des Zirconiumdioxids mit wäßrigen oder alkoholischen Salzlösungen der Lanthaniden. Diese Katalysatoren können zusätzlich weitere Dotierungen, wie Chrom, Eisen, Yttrium, Hafnium oder Mangan in Mengen von 0,01 bis 10 Gew.-% enthalten. Die mit Lanthaniden dotierten Katalysatoren enthalten vorzugsweise keine derartigen Zusätze. Geeignete derartige Katalysatoren sind beispielsweise in den DE-A-195 09 552, DE-A-44 43 704, DE-A-44 28 994, EP-A-0 716 070, DE-A-44 19 514 beschrieben.

Auch Dotierungen mit Metallen wie Nickel, Kupfer, Kobalt, Palladium, Platin oder Mangan, Chrom und anderen Metallen sowie deren Gemischen sind möglich.

Das Dotieren kann dabei durch Imprägnieren, Beschichten oder Aufsprühen von Metallen oder Metallsalzlösungen, wie den Nitraten, Acetaten oder Formiaten erfolgen. Vorzugsweise werden Übergangsmetalle zum Dotieren verwendet.

Die Katalysatoren können für eine Vielzahl von Umsetzungen verwendet werden. Beispiele sind Hydrierungen und/oder Dehydrierungen, Fischer-Tropsch-Synthesen, Entschwefelungen, Isomerisierungen, Polymerisationen oder das Steamreforming. Dabei werden insbesondere die sulfatierten Zirconiumdioxidkatalysatoren als Supersäuren bei Isomerisierungen oder Polymerisationen eingesetzt.

Weitere Anwendungen sind dem Fachmann bekannt.

Nachstehend wird die Erfindung durch Beispiele weiter erläutert:

### BEISPIEL 1

Zirconylchlorid (95%) wurde innerhalb von 5 Minuten in Wasser gelöst, wobei sich eine Zirconiumkonzentration von 0,34 mol ergab. Durch Zugabe einer wäßrigen Lösung von Ammoniak (Roth, etwa 25%) innerhalb weniger Sekunden bis zu einem End-pH-Wert von 5 wurde das Zirconiumdioxid gefällt. Nach der Fällung wurde die Mischung noch für 7,5 Minuten gerührt und für eine wie nachstehend angegebene Zeit bei 90°C gealtert, bevor der Niederschlag abfiltriert, mit destilliertem Wasser gewaschen und bei 90°C über 24 Stunden getrocknet wurde. Anschließend wurde mit einer Aufheizrate von 1°C/min auf 550°C aufgeheizt und für 5 Stunden bei dieser Temperatur belassen.

Ohne Alterung wurde eine tetragonale Phase erhalten. Bei Alterung für 24 Stunden wurde eine Mischphase mit höherem Anteil an tetragonaler Phase und geringerem Anteil an monokliner Phase erhalten. Bei einer Alterungsdauer von 144 Stunden wurde eine Mischphase mit einem höheren Anteil an monokliner und einem geringeren Anteil an tetragonaler Phase erhalten. Bei einer Alterungsdauer von 432 Stunden wurde eine rein monokline Phase erhalten.

Von den erhaltenen calcinierten Proben wurden Röntgendiffraktogramme mit Kupfer-Kα-Strahlung aufgenommen.

In Fig. 1 sind von oben nach unten die Spektren der nicht gealterten, der für 24 Stunden, 144 Stunden bzw. 432 Stunden gealterten Proben aufgeführt. Dabei ist die Intensität I gegen den Beugungswinkel (2 Theta) aufgetragen.

Die Bestimmung des Anteils an monokliner Phase erfolgte durch quantitative Auswertung der Diffraktogramme. Für die tetragonale Phase wird ein Signal im Bereich von 2 Theta = 29,5 bis 30,5 erhalten. Für die monokline Phase werden 2 Signale im Bereich von 2 Theta = 27,5 bis 28,5 und 31 bis 32 erhalten. Die Genauigkeit der Messungen beträgt etwa 5 bis 10%.

Die Versuche zeigen, daß die kristalline Phase des Zirconiumdioxids durch Alterung zur monoklinen Phase verschoben werden kann.

### BEISPIEL 2

Es wurde das Verfahren gemäß Beispiel 1 durchgeführt, wobei jedoch die Calcinierbedingungen variiert wurden. Es wurde mit einer Aufheizrate von 1°C/min auf die Calciniertemperatur aufgeheizt und 4 Stunden bei dieser Temperatur gehalten (Calzinierart A). Andererseits wurden die Proben in einen auf die Calciniertemperatur vorgeheizten Ofen gestellt (Calzinierart B). Die Ergebnisse sind in der nachstehenden Tabelle aufgeführt.

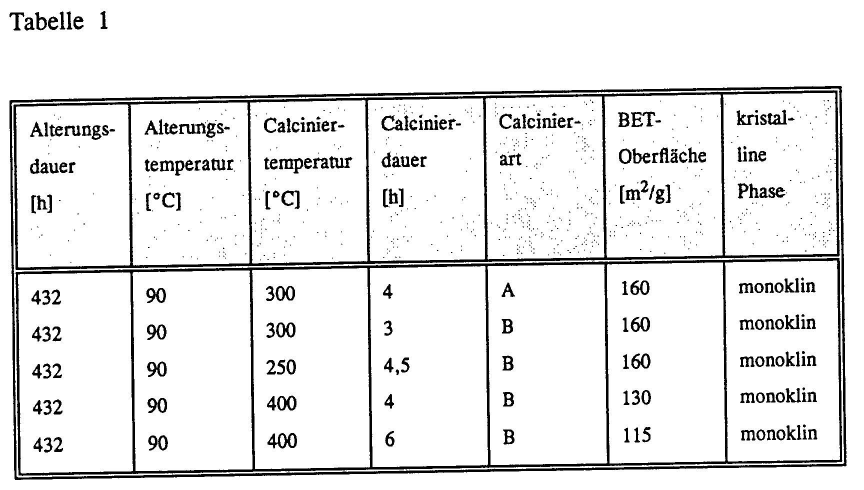

Die erhaltenen Zirconiumdioxide wiesen eine vollständig monokline Phase auf. Es konnte monoklines Zirconiumdioxid mit einer sehr hohen BET-Oberfläche hergestellt werden.

### BEISPIEL 3

Es wurde wiederum das Verfahren gemäß Beispiel 1 durchgeführt. Die Fällung wurde für unterschiedliche Zeiten bei unterschiedlichen Temperaturen gealtert, worauf das Fällungsprodukt abfiltriert, mit destilliertem Wasser gewaschen und bei 90°C für 24 Stunden getrocknet wurde. Anschließend wurde mit einer Aufheizrate von 1°C/min auf eine Temperatur von 300°C aufgeheizt und für 4 Stunden bei dieser Temperatur belassen. Die Ergebnisse sind in der nachstehenden Tabelle 2 wiedergegeben.

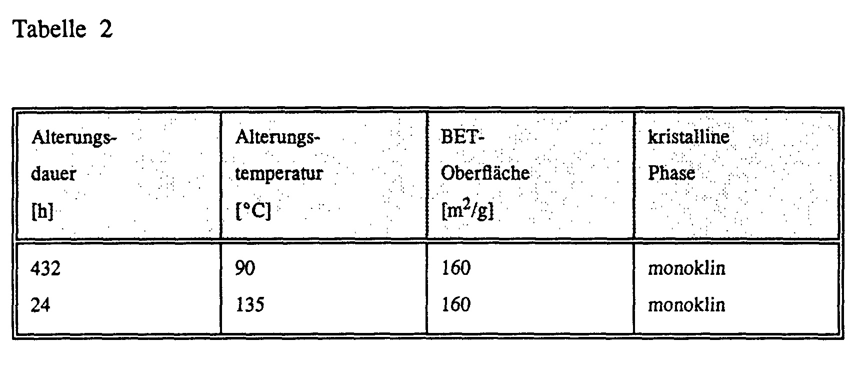

Aus den Ergebnissen geht hervor, daß durch Erhöhung der Alterungstemperatur die Alterungszeit deutlich vermindert werden kann, wobei weiterhin monoklines Zirconiumdioxid mit hoher Oberfläche erhalten wird.

### BEISPIEL 4

Es wurde wiederum gemäß dem in Beispiel 1 beschriebenen Verfahren vorgegangen. Nach der Fällung wurde jedoch die erhaltene und das Fällungsprodukt enthaltende flüssige Phase mit Ammoniumsulfatlösung (Fluka, 99%) versetzt, so daß die Endkonzentration 0,5 M betrug. Die Suspension wurde für 2 Stunden gerührt und danach wie in Beispiel 1 beschrieben weiterverarbeitet. Die Ergebnisse für unterschiedliche Alterungsdauern sind in der nachstehenden Tabelle angegeben.

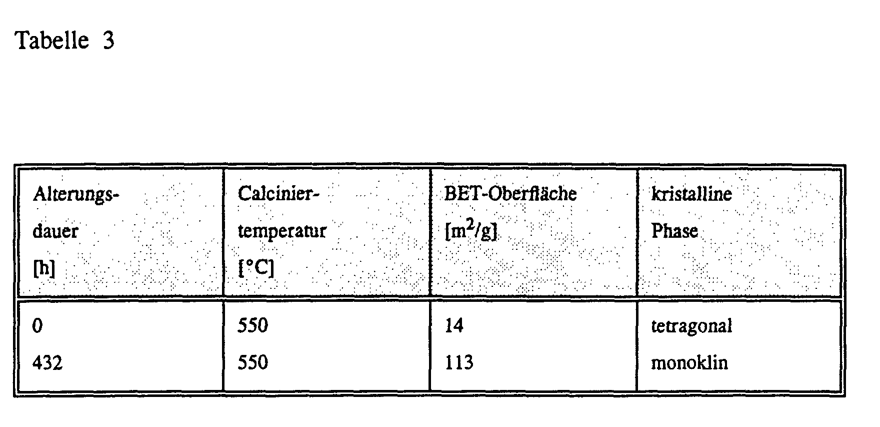

Für das sulfatierte Zirconiumdioxid wird bei einer hohen Calciniertemperatur eine hohe BET-Oberfläche erhalten.

### Vergleichsbeispiel A (Appl. Catal. 57 (1990), S. 128-129)

Eine Zirconylnitrat-Lösung mit einem ZrO₂-Gehalt von 15 Gew.-% wurde durch Lösen von Zirconiumcarbonat (ca. 43 Gew.-% ZrO₂) in konzentrierter Salpetersäure hergestellt.

Dann wurden in vorgelegtes Wasser unter Rühren gleichzeitig Ammoniakwasser (12,5 Gew.-% NH₃) und Zirconylnitrat-Lösung zugepumpt. Dabei wurde der pH-Wert in der Fällung auf 9,3 konstant gehalten. Nach einer Nachrührzeit von 10 Minuten wurde zur Vermeidung der Geruchsbelästigung der pH-Wert mittels Salpetersäure auf pH = 7,5 eingestellt.

Das Fällungsprodukt wurde ausgewaschen, getrocknet und bei 400°C calciniert. Man erhielt ein feinkristallines Pulver, bestehend aus 60% tetragonalem und 40% monoklinem Zirconiumdioxid.

### Vergleichsbeispiel B (nach FR-A-25 90 887, Beispiel 1)

Aus 60%iger Salpetersäure und Zirconiumdioxid (ca. 44 Gew.-% ZrO₂) und anschließendes Verdünnen mit vollentsalztem Wasser wurde eine Lösung, die 3,75 Gew.-% ZrO₂ (0,3 molar) enthielt, hergestellt.

Diese Lösung (pH = 0,75) wurde in einem Rührbehälter vorgelegt. Dann wurde innerhalb von 6 Minuten Ammoniakwasser (25 Gew.-% NH₃) bis zu einem pH-Wert von 10,4 zugepumpt.

Das Fällungsprodukt wurde auf einer Filterpresse bis zu einer konstanten Leitfähigkeit von 20 *µ*m/cm ausgewaschen, bei 120°C getrocknet und 2 Stunden bei 400°C calciniert. Das erhaltene Zirconiumdioxid mit einer BET-Oberfläche von 149 m²/g war feinkristallin und enthielt ca. 80% tetragonale und ca. 20% monokline Modifikation.

### Vergleichsbeispiel C (nach Catalysis Today 20 (1994) Seite 296)

Eine Zirconylnitrat-Lösung mit einem ZrO₂-Gehalt von 15 Gew.-% wurde durch Lösen von Zirconiumcarbonat (ca. 43 Gew.-% ZrO₂) in konzentrierter Salpetersäure hergestellt und unter Rühren am Rückfluß gekocht; dabei lag der pH-Wert unter 1. Nach ca. 10 Minuten trat eine Trübung auf, die sich bei weiterem Kochen bis zur Niederschlagsbildung verstärkte. Nach 50stündigem Erhitzen am Rückfluß wurde der Niederschlag abfiltriert, gewaschen, getrocknet und bei 400°C calciniert. Das Produkt hatte eine BET-Oberfläche von 155 m²/g und bestand zu 80 % aus tetragonalem und 20 % monoklinem ZrO₂.

### Vergleichsbeispiel D (nach EP-A-0 716 833, Beispiel 1)

Durch Auflösen von Zirconiumcarbonat (ca. 43 Gew.-% ZrO₂) in konzentrierter Salpetersäure erhielt man eine Zirconylnitrat-Lösung mit einem Gehalt von 19 Gew.-% ZrO₂ und einer Dichte von 1,57 g/ml.

In einem Rührbehälter wurde Ammoniakwasser (12,5 Gew.-% NH₃) vorgelegt, dann pumpte man die Zirconylnitrat-Lösung bei gleichzeitigem Rühren innerhalb von 60 Minuten zu, bis der pH-Wert von 7,5 erreicht war. Dabei erhöhte sich die Temperatur auf 54°C. Nach einer Nachrührzeit von 10 Minuten wurde auf einer Filterpresse bis zu einer Leitfähigkeit von 20 *µ*m/cm ausgewaschen, bei 120°C getrocknet und bei 400°C calciniert.

Das Produkt war feinkristallin und hatte eine BET-Oberfläche von 81 m²/g. Es bestand zu 95% aus monoklinem und zu 5% aus tetragonalem Zirconiumdioxid.

## Patentansprüche

1. Verfahren zur Herstellung von Zirconiumdioxid, das zu mindestens 80 Gew.-% monoklin ist und eine BET-Oberfläche von mindestens 100 m²/g aufweist, durch
Versetzen von wäßrigen Zirconiumsalzlösungen mit Ammoniak, bis ein Fällungsprodukt und eine wäßrige Phase gebildet werden und der pH-Wert nach der Fällung 4 bis 6 beträgt,
Altem des Fällungsproduktes in der wäßrigen Phase bei einer Temperatur von 20 bis 250°C für mindestens 2 Stunden,
Trocknen des gealterten Fällungsproduktes und
Calcinieren des Fällungsproduktes bei einer Temperatur im Bereich von 200 bis 600°C.

## Claims

1. A process for preparing zirconium dioxide which is monoclinic to at least 80% by weight and has a BET surface area of at least 100 m²/g by
admixing aqueous zirconium salt solutions with ammonia until a precipitation product and an aqueous phase are formed and the pH after precipitation is from 4 to 6,
aging the precipitation product in the aqueous phase at from 20 to 250°C for at least 2 hours,
drying the aged precipitation product and
calcining the precipitation product at from 200 to 600°C.

## Revendications

1. Procédé de préparation de dioxyde de zirconium, qui est monoclinique pour au moins 80% en poids et qui présente une surface BET d'au moins 100 m²/g, par
addition d'ammoniac à des solutions aqueuses de sel de zirconium, jusqu'à ce qu'un produit de précipitation et une phase aqueuse soient formés et que la valeur du pH après la précipitation soit de 4 à 6,
vieillissement du produit de précipitation dans la phase aqueuse à une température de 20 à 250°C pendant au moins 2 heures,
séchage du produit de précipitation vieilli, et
calcination du produit de précipitation à une température de l'ordre de 200 à 600°C.
